# EUROPEAN PATENT SPECIFICATION

(11) **EP 0 450 675 B1**
(45) Date of publication and mention of the grant of the patent: **26.01.1994**
(21) Application number: 91200415.7
(22) Date of filing: 27.02.1991
(51) Int. Cl.: E02D 15/10, F16L 1/12

(54) **Vessel for depositing material on the sea bed**
Schiff zum Schütten von Material auf den Meeresboden
Navire pour le dépôt de matériaux sur le fond de l'eau

(30) Priority: 05.03.1990 NL 9000501
(43) Date of publication of application: 09.10.1991
(73) Proprietor: VAN OORD ACZ B.V., 4207 HN Gorinchem (NL)
(72) Inventor: de Ridder, Pieter Hendrik Geerard, NL-4207 AE Gorinchem (NL)
(74) Representative: Vollebregt, Cornelis Jacobus, Ir.

(56) References cited:
- DE-A- 3 121 361
- FR-A- 2 468 707
- GB-A- 6 635
- NL-A- 8 102 244
- US-A- 3 428 156
- US-A- 3 688 510

## Description

The invention relates to a vessel provided with tubular means descending from or beside the vessel, said tubular means being intended for depositing material therethrough on the underwater bottom surface, wherein driving means are provided near the bottom end of said tubular means, by which the end of the tubular means is movable transversely to the longitudinal axis of the tubular means, and wherein hoisting cables are attached to the bottom end of the tubular means, which hoisting cables extend between the bottom end of the tubular means and hoisting gear present on the vessel.

Such a vessel is known from Dutch Patent Application NL-A-8102244. As is explained in said Application such a vessel is e.g. used for depositing stones intended for the protection of the bottom or of objects present on the bottom, such as pipelines and the like. This vessel is applied successfully when using tubular means built up of steel nets, which can be lifted from its operating position into a collapsed position in a short time, and which can also be returned from said collapsed position to the operating position in a short time.

It is also increasingly required, however, to deposit sand or similar fine-grained material at greater depths, e.g. so as to provide an insulating cover on pipelines. When using the above embodiment, wherein the tubular means is built up of steel nets, it becomes apparent, however, that too great a part of said fine-grained material slips through the mesh of the net and thus does not land in the intended place.

The object of the invention is therefore to obtain a vessel of the above kind, by means of which also fine-grained material can be effectively deposited on the required place on an underwater bottom surface or on objects present on said bottom surface, as the case may be.

According to the invention this can be achieved in that along at least most of its length the tubular means is built up of a number of shells arranged one above the other, whose upper sides and bottom sides are open, said shells slightly tapering off toward the bottom, wherein the upper end of a shell overlaps the bottom end of a shell located thereabove, while forming an open gap between said overlapping shell ends, each shell being connected, by flexible connecting means, to the shell located directly therebelow.

When shells are used fine-grained material, such as sand or the like, cannot escape laterally from the tubular means through said shells having a closed surface. At the same time it appears that as a result of the conical shape of the shells and the presence of the gaps between the overlapping ends of the shells an effective downward flow of water and material to be deposited present therein takes place, so that, also when fine material, such as sand, is being deposited a comparatively large production capacity, i.e. a comparatively large number of tonnes of material per time unit, is achieved.

In addition it is possible to preserve the advantage of the above-described known construction with regard to the possibility of quickly putting the tubular means into an operating position, or lifting said tubular means, as the case may be, wherein the tubular means occupies comparatively little space, which also contributes towards achieving a large number of productive hours. At the same time, as a result of the flexible construction of the tubular means built up of shells, it is still possible to move the bottom end of the tubular means, by suitable driving means, transversely to the longitudinal direction of the tubular means, so as to be able to deposit material on the required place in the best possible manner.

Of course the construction according to the invention is not only suitable for depositing fine-grained material such as sand, but also for depositing stones or the like. When in that case the shells are made of a material having a low specific gravity, e.g. comparable with the specific gravity of water, a tubular means of considerable length can be used without undesirably large forces being exerted on the parts supporting the tubular means, so that the device according to the invention is also suitable for depositing at great depths.

DE-A-3 121 361 discloses a vessel for depositing material on a bottom surface under water. For this purpose the vessel is equipped with a vertically extending chute. Particularly when depositing at greater depths the use of such a rigid chute presents many problems. A great length of a chute also involves a large weight of such a chute, so that again comparatively heavy and complicated devices are required in order to be able to move the chute upwards and downwards in its longitudinal direction, since it is usually not acceptable and, in connection with the depth of the water, not possible to allow the chute to project under the vessel while moving the vessel from the one working location to the other. Also the forces exerted on such a chute during operation will be comparatively large, and must be transmitted to the vessel via suitable heavy connecting parts. In practice it has also become apparent, that in case of worsening weather conditions it is much sooner necessary to stop operations with a vessel equipped with such a rigid chute having a great length than with a vessel equipped with a tubular means having a flexible construction.

As is set forth in DE-A- 3 121 361 the described construction is in particular intended for depositing material having a grain size of 20 - 200 mm. In order to reduce the exit velocity at the bottom end of the chute it is proposed to give the bottom end of the chute a larger cross-section than the other part of the tube. In one of the embodiments three funnel-shaped, partially overlapping shells are secured to the bottom end of the chute for this purpose, said shells also having a wider diameter than the tube 7, even at their narrowest ends. Insofar as can be derived from this publication the shells are thereby fixedly arranged with respect to each other and with respect to the chute.

Of course such a vessel equipped with a long closed chute can also be used for depositing fine-grained material such as sand, but in such a closed chute such fine-grained material will move downwards only comparatively slowly, so that the production capacity will only be small in such a case.

The use of chutes built up of partially overlapping conical shells per se has been known for many decades already, as appears inter alia from British Specification GB-A-6635/1909, US Patent Specification US-A-3,428,156 and French Patent Specification FR-A-2,468,707, but all these publications relate to chutes used aboveground, which occupy a stationary position during operation.

The invention will be explained in more detail hereafter, with reference to an embodiment of the construction according to the invention diagrammatically illustrated in the accompanying Figures.

Figure 1 diagrammatically illustrates part of a vessel with a tubular means in the operating position, said tubular means being supported by said vessel.

Figure 2 shows a view corresponding with Figure 1, with the tubular means in its collapsed position.

Figure 3 shows on a larger-scale a few shells forming part of the tubular means.

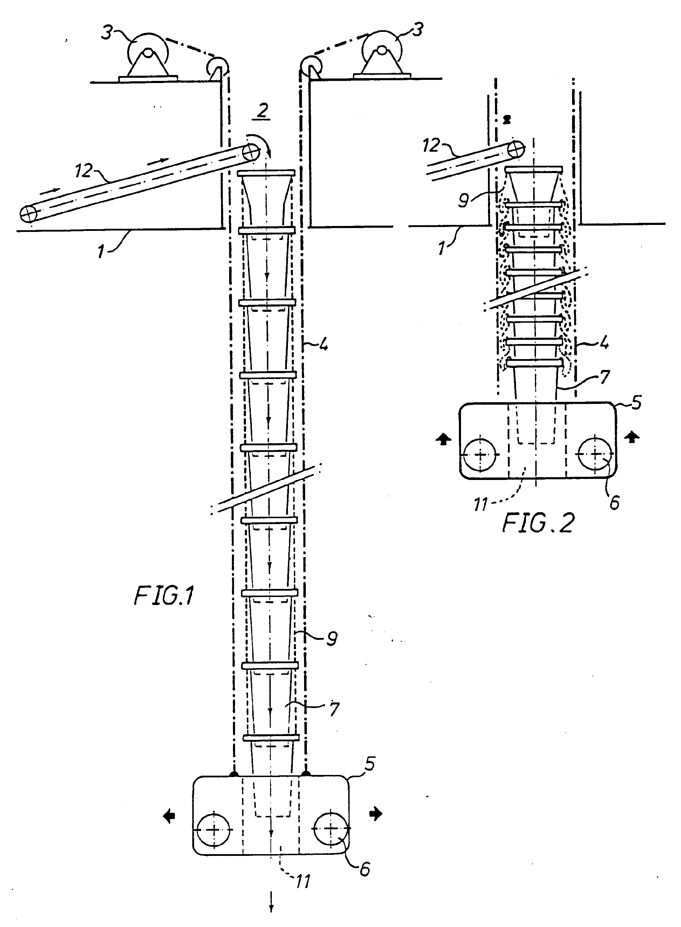

Figure 1 diagrammatically illustrates a vessel 1. Said vessel is provided with a shaft 2 extending along or through the hull of the vessel. Near said shaft winches 3 are disposed, from which a block 5 is suspended by means of cables 4. Said block 5, which forms the bottom end of the chute to be described hereafter, is provided with diagrammatically indicated driving motors 6, by means of which the block 5, and with it the bottom end of the chute, can be moved in directions perpendicularly to each other and transversely to the longitudinal direction of the chute.

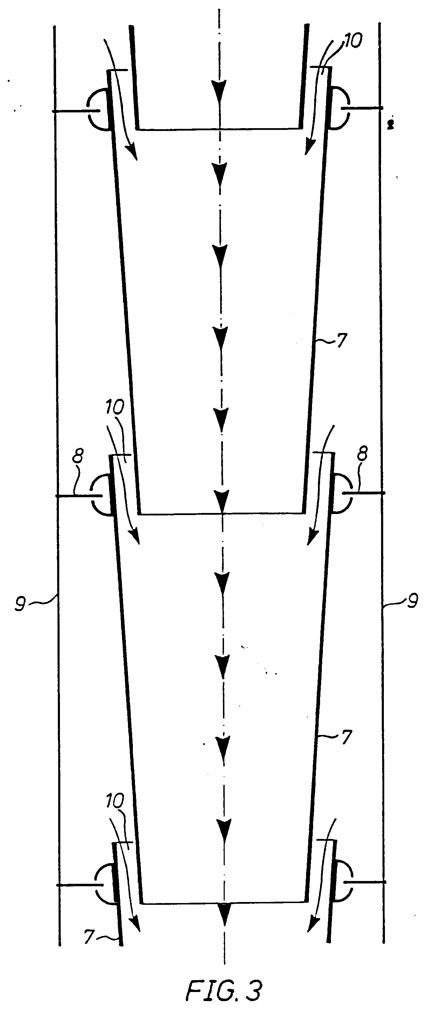

The actual chute is built up of a plurality of shells 7 arranged one above the other. As is diagrammatically illustrated in Figure 3 the shells 7 are pivotally coupled near their upper ends, by coupling means 8, to upwardly extending cables 9. As furthermore appears from the Figures the shells 7, which are open at their upper and lower ends, slightly taper off toward the bottom. The connection between the shells 7 and the cables 9 is thereby such, that in the operating position the upper end of a shell 7 surrounds the lower end of a shell 7 located thereabove, whilst a gap 10 is formed between the shell ends in question.

As furthermore appears from Figures 1 and 2 the lower end of the lowermost shell 7 is located within the upper end of a passage 11 provided in the block 5.

In order to deposit material, such as e.g. sand or stones, material to be deposited, which is present in the hold of the vessel 1, can be deposited into the upper end of the chute by means of a belt conveyor 12, so that said material falls down the chute formed by the shells 7. This will create a downward flow in the chute, and water can be sucked into the interior of the chute through the gaps 10 present between the shells located one above the other, all this as indicated by means of arrows in the Figures. Accordingly a comparatively large quantity of material per time unit can move downwards through the chute, also when fine-grained material such as sand is used.

The chute formed by the shells 7 may be suspended, by means of the cables 9, from the winches 3 or from further winches provided on the vessel, by means of which the chute can be lifted. The conical shells 7 may thereby be telescoped, as is diagrammatically indicated in Figure 2, so that the shells forming the chute will occupy only comparatively little space when out of use. The telescoped shells can thereby be removed in groups and be stored on the vessel, whilst when the chute is being extended the successive shells can be provided in groups again.

Preferably the shells 7 are made of a material having a specific weight which at least substantially corresponds with the specific weight of water. When using such shells no undesirably large forces will be exerted on the cables and the like supporting the shells, so that a tubular means, built up of shells 7, having a great length can be used (depositing at a great depth, therefore), without undesirably large forces being exerted on the cables 9 and the parts connecting the cables 9 to the vessel.

## Claims

1. A vessel (1) provided with tubular means descending from or beside the vessel (1), said tubular means being intended for depositing material therethrough on the underwater bottom surface, wherein driving means (6) are provided near the bottom end (5) of said tubular means, by which the end of the tubular means is movable transversely to the longitudinal axis of the tubular means, and wherein hoisting cables (4) are attached to the bottom end of the tubular means, which hoisting cables extend between the bottom end of the tubular means and hoisting gear (3) present on the vessel (1), characterized in that along at least most of its length the tubular means is built up of a number of shells (7) arranged one above the other, whose upper sides and bottom sides are open, said shells slightly tapering off toward the bottom, wherein the upper end of a shell overlaps the bottom end of a shell located thereabove, while forming an open gap (10) between said overlapping shell ends, each shell (7) being connected, by flexible connecting means (9), to the shell located directly therebelow.

2. A vessel according to claim 1, characterized in that said shells (7) are made to have a specific gravity at least substantially equal to the specific gravity of water.

3. A vessel according to claim 1 or 2, characterized in that near their upper ends said shells (7) are coupled to flexible means (9) interconnecting the shells, such as chains or cables.

## Patentansprüche

1. Wasserfahrzeug (1) mit einem rohrförmigen Mittel, das von dem Wasserfahrzeug (1) aus oder seitlich davon nach unten verläuft, wobei das rohrförmige Mittel dazu vorgesehen ist, durch es hindurch Material auf der Unterwasserbodenfläche abzulagern, wobei Antriebsmittel (6) nahe des unteren Endes (5) des rohrförmigen Mittels vorgesehen sind, mit deren Hilfe das Ende des rohrförmigen Mittels quer zur Längsachse des rohrförmigen Mittels beweglich ist, und wobei am unteren Ende des rohrförmigen Mittels Hubkabel (4) befestigt sind, die sich zwischen dem unteren Ende des rohrförmigen Mittels und einem an dem Wasserfahrzeug (1) vorhandenen Hubwerk (3) erstrecken, dadurch gekennzeichnet, daß das rohrförmige Mittel entlang des größten Teils seiner Lange aus einer Anzahl von übereinander angeordneten Hülsen (7) aufgebaut ist, deren obere und untere Seiten offen sind, wobei die Hülsen sich gegen die Unterseite hin geringfügig verjüngen, wobei das obere Ende einer Hülse das untere Ende einer darüber angeordneten Hülse überlappt, während zwischen den sich überlappenden Hülsenenden ein offener Spalt (10) entsteht, wobei jede Hülse (7) mit Hilfe eines flexiblen Verbindungsmittels (9) mit der unmittelbar darunter angeordneten Hülse verbunden ist.

2. Wasserfahrzeug nach Anspruch 1, dadurch gekennzeichnet, daß die Hülsen (7) so hergestellt sind, daß sie ein spezifisches Gewicht haben, das zumindest im wesentlichen gleich dem spezifischen Gewicht von Wasser ist.

3. Wasserfahrzeug nach Anspruch 1 oder 2, dadurch gekennzeichnet, daß die Hülsen (7) nahe ihrer oberen Enden mit die Hülsen verbindenden flexiblen Mitteln (9), beispielsweise Ketten oder Kabel, verbunden sind.

## Revendications

1. Navire (1) pourvu d'un moyen tubulaire descendant à partir du navire (1) ou à côté de celui-ci, ce moyen tubulaire étant destiné à déposer, à travers lui, un matériau sur le fond de l'eau, comportant des moyens d'entraînement (6) prévus au voisinage de l'extrémité inférieure (5) du moyen tubulaire pour pouvoir déplacer l'extrémité du moyen tubulaire dans le sens transversal par rapport à l'axe longitudinal de ce moyen tubulaire, et des câbles de levage (4) attachés à l'extrémité inférieure du moyen tubulaire, ces câbles de levage s'étendant entre l'extrémité inférieure du moyen tubulaire et un équipement de levage (3) présent sur le navire (1), caractérisé en ce que le moyen tubulaire est constitué, au moins sur la plus grande partie de sa longueur, d'un certain nombre d'enveloppes (7) disposées les unes au-dessus des autres, dont les faces supérieures et inférieures sont ouvertes, ces enveloppes convergeant légèrement en direction du fond de l'eau, l'extrémité supérieure d'une enveloppe coiffe l'extrémité inférieure d'une enveloppe située juste au-dessus de la précédente, tout en formant un intervalle ouvert (10) entre les extrémités des enveloppes se chevauchant l'une de l'autre, et chaque enveloppe (7), est reliée, par des moyens de liaison flexibles (19), à l'enveloppe se trouvant directement en dessous d'elle.

2. Navire suivant la revendication 1 caractérisé en ce que les enveloppes (7) sont réalisées de manière à avoir un poids spécifique au moins sensiblement égal au poids spécifique de l'eau.

3. Navire suivant la revendication 1 ou 2 caractérisé en ce que les extrémités supérieures des enveloppes (7) sont reliées à des moyens flexibles (9), tels que des chaînes ou des câbles, interconnectant les enveloppes.
